Europäisches Patentamt

European Patent Office

Office européen des brevets

(11) Veröffentlichungsnummer: **0 554 534 A1**

# (12) EUROPÄISCHE PATENTANMELDUNG

(21) Anmeldenummer: **92120206.5**

(22) Anmeldetag: **26.11.92**

(51) Int. Cl.5: **B01D 15/08**, C13D 3/14, G01N 30/38

(30) Priorität: **05.02.92 DE 4203268**

(43) Veröffentlichungstag der Anmeldung: **11.08.93 Patentblatt 93/32**

(84) Benannte Vertragsstaaten: **AT BE CH DE DK ES FR GB GR IE IT LI LU MC NL PT SE**

(71) Anmelder: **Laevosan-Gesellschaft m.b.H. Estermannstrasse 17 A-4020 Linz(AT)**

(72) Erfinder: **Nitsch, Ernst Voltastrasse 33 A-4040 Linz(AT)** Erfinder: **Pöchmann, Hanns Gusenfeldstrasse 9 A-4222 St. Georgen/Gusen(AT)**

(74) Vertreter: **Huber, Bernhard, Dipl.-Chem. et al Patentanwälte H. Weickmann, Dr. K. Fincke F.A. Weickmann, B. Huber Dr. H. Liska, Dr. J. Prechtel, Dr. B. Böhm, Kopernikusstrasse 9, Postfach 86 08 20 W-8000 München 86 (DE)**

(54) **Verfahren zur chromatographischen Trennung.**

(57) Zur chromatographischen Auftrennung oder/und Reinigung von Substanzen oder Substanzgemischen über mindestens eine vertikal angeordnete Trennsäule führt man an der Trennsäule mindestens 2 Behandlungszyklen mit Lösungen alternierender spezifischer Dichte durch, wobei die Lösungen immer vom gleichen Ende her auf die Säule gegeben werden und die Säule mindestens einmal um die Querachse gedreht wird, so daß der Dichtegradient des in der Säule befindlichen Flüssigkeitsstromes immer so gerichtet ist, daß die Dichte in Richtung der Schwerkraft zunimmt.

Rank Xerox (UK) Business Services
(3. 10/3.6/3.3. 1)

EP 0 554 534 A1

Die vorliegende Erfindung betrifft ein Verfahren zur chromatographischen Auftrennung oder/und Reinigung von Substanzen oder Substanzgemischen über mindestens eine vertikal angeordnete Trennsäule.

In sehr großem Umfang werden heute chromatographische Trenn- und Reinigungsverfahren in der chemischen Technik eingesetzt (Konrad Dorfner: Ion Exchangers, Verlag Walter de Gruyter Berlin-New York 1991, S. 677-684) und (P.E. Barker, G. Ganetsos, Separation and Purification Methods 17(1)(1988), S. 1 - 65), so beispielsweise zur Anreicherung oder Trennung von Fructose und Glucose aus Invertzucker oder isomerisierten Stärkesirupen (AT-PS 260140 und DE-AS 20 37 656), zur Melassenentzuckerung (US-PS 4,426,232), zur Reinigung von Glycerin (D.R. Asher, D.W. Simpson, J. Phys. Chem. 60(1956), S. 518) oder zur Reinigung oder Fraktionierung von Proteinen (J.M. Curling, Chromatography of Synthetic and Biological Polymers, Vol. 2, Epton, R., Ed., Ellis Horwood, Chichester, 1978, Kapitel 6; J.M. Curling, J.H. Gerglof, S. Erikson and J.M. Cooney, Joint meeting of the 18th Congress of the International Society of Haematology and the 16th Congress of the International Society of Blood Transfusion, Montreal, Quebec, Aug. 16 to 22, 1980 und R. Eketorp, Affinity Chromatography and Related Techniques, Gribnau, T.C.J., Visser, J., und Nivard, R.J.F., Eds., Elsevier, Amsterdam, 1982, 263).

Hierbei werden granuläre oder kugelförmige Trennmedien, wie Ionenaustauscher, Zeolithe oder Cellulosederivate als Füllung in meist zylindrischen Trennsäulen verschiedener Proportion, Größe und Anordnung verwendet. Meistens werden mehrere in Serie geschaltete Säulen entweder in linearer (stationary port technique) oder kreisförmiger Anordnung (moving port technique) eingesetzt (EP-A-0 415 822 und P.E. Barker, A. Knoechelmann, G. Ganetsos, Chromatographia 29 (3/4) (1990), S. 161-166). Als Elutionsmittel dienen in der Regel Wasser, wäßrige Pufferlösungen, nicht-wäßrige Lösungsmittel oder Lösungsmittelgemische. Die zu trennenden Gemische werden als möglichst konzentrierte Lösungen auf den Kopf oder Boden der Säule oder des Säulensystems aufgegeben. Um eine gute und rationelle chromatographische Trennung zu erhalten, sind jedoch zahlreiche Bedingungen zu erfüllen, deren Einhaltung häufig Schwierigkeiten bereitet.

So muß durch entsprechende Konstruktion von Deckeln und Böden für eine möglichst gleichmäßige Verteilung des Aufgabeproduktes und des Elutionsmittels über den Säulenquerschnitt gesorgt werden. Ebenso soll das Trennmedium totraumarm und in gleichmäßiger Packung gefüllt vorliegen. Von großem Einfluß sind Größe und Größenverteilung der Partikel. In der Regel werden Trennungen umso schärfer, je kleiner und gleichmäßiger die Partikel sind. In der Praxis muß jedoch ein Kompromiß geschlossen werden, da mit sinkender Partikelgröße der Fließwiderstand und damit der Druckverlust der Systeme rasch zunimmt, wobei die meisten Trennmedien Verformung und unzulässige Bettkompression erleiden. Typische und häufig eingesetzte Handelsprodukte sind z.B. die Kationenaustauscher LEWATIT TSW 40 und LEWATIT UCR 800 der Firma Bayer, Leverkusen, mit einer effektiven Korngröße von 0,35 mm.

Einem Phänomen, das mit der Partikeleigenschaft des Trennmediums zusammenhängt, wurde bisher bei der Optimierung der Chromatographiebedingungen kein Augenmerk geschenkt: Bei Aufgabe einer relativ konzentrierten Produktlösung auf den Kopf einer mit Lösungsmittel gewaschenen Säule wird aufgrund der gegenüber dem Lösungsmittel größeren Dichte eine Tendenz zum Durchsickern durch die zwischen den Körnern vorliegende Flüssigkeit, getrieben von der Schwerkraft gefunden, d.h. die Produktlösung wird sich schneller nach unten bewegen, als es der Zuflußgeschwindigkeit entspricht und dabei auch weniger Kontakt mit dem Trennmedium haben. Dieser Effekt tritt umso stärker in Erscheinung, je größer die Partikel und damit deren Zwischenräume sind und je kleiner die Fließgeschwindigkeit des Systems ist.

So wird z.B. bei Aufgabe einer kleinen Menge einer dichten Lösung auf den Kopf der mit dem Trennmedium und reinem Elutionsmittel gefüllten Säule und anschließend gestopptem Fluß sich nach einiger Zeit an deren Boden Aufgabeprodukt nachweisen lassen.

Das oben genannte Phänomen läßt sich vermeiden, wenn die Aufgabe am Boden der Säule erfolgt, weil dann die spezifisch schwerere Produktlösung das leichtere Lösungsmittel nach oben verdrängt und über die unvermeidliche Diffusion hinaus keine Vermischung geschieht. Jedoch tritt auch in diesem Fall dieselbe Schwierigkeit auf, sobald die Elutionsphase mit dem reinen Lösungsmittel beginnt, denn nun hat die spezifisch leichte Flüssigkeit das Bestreben, nach oben durchzusickern.

Die der vorliegenden Erfindung zugrundeliegende Aufgabe bestand somit darin, die Nachteile zu vermeiden, die in einer vertikal angeordneten Trennsäule mit teilchenförmigem Trennmedium beim Durchsickern einer spezifisch schwereren Flüssigkeit nach unten bzw. einer spezifisch leichteren Flüssigkeit nach oben entstehen.

Diese Aufgabe wird gelöst durch ein Verfahren zur chromatographischen Auftrennung oder/und Reinigung von Substanzen oder Substanzgemischen über mindestens eine vertikal angeordnete Trennsäule, welches dadurch gekennzeichnet ist, daß man an der Trennsäule mindestens 2 Behandlungszyklen mit Lösungen alternierender spezifischer Dichte, d.h. in der Regel 1. mit einer Lösung des zu trennenden Produktes und 2. mit dem reinen Elutionsmittel durchführt, wobei die Lösungen immer vom gleichen Ende

2

EP 0 554 534 A1

her auf die Säule gegeben werden, und wobei die Säule mindestens einmal um die Querachse gedreht wird, so daß der Dichtegradient des in der Säule befindlichen Flüssigkeitsstromes immer so gerichtet ist, daß die Dichte in Richtung der Schwerkraft zunimmt.

Durch die Drehung um die Querachse wird die Säule praktisch um ca. 180° gedreht, derart, daß das obere Säulenende zum untere Säulenende wird und das vorher untere Säulenende danach das obere Säulenende darstellt.

Das erfindungsgemäße Verfahren kann für beliebige chromatographische Trennprozesse eingesetzt werden, z.B. bei der Abtrennung eines Produktes und Verunreinigungen oder bei der Auftrennung eines Substanzgemisches. Eine besonders bevorzugte Anwendung ist die Trennung von verschiedenen Kohlehydraten, wie etwa Fructose und Glucose.

Unter dem Begriff "mindestens eine vertikal angeordnete Trennsäule" ist eine oder ein System von mehreren, vorzugsweise in Serie geschalteten, chromatographischen Trennsäulen zu verstehen. Die Trennsäulen weisen vorzugsweise eine zylindrische Form auf. Die vertikal Anordnung bedeutet, daß sich die Zutritts- und die Abflußöffnung der Säule im Bereich des oberen bzw. unteren Säulenendes befinden. Auf diese Weise verläuft der Flüssigkeitsstrom bei Betrieb der Säule im wesentlichen in Richtung der Schwerkraft oder dagegen.

Ein Beispiel für ein erfindungsgemäße geeignetes Trennmedium ist das Kationenaustauscherharz LEWATIT TSW 40 (Bayer) mit einer Teilchengröße von 0,35 mm.

Unter der Durchführung von mindestens zwei Behandlungszyklen mit Lösungen alternierender Dichte an der Trennsäule ist zu verstehen, daß die Trennsäule nacheinander mit mindestens zwei flüssigen Medien verschiedener Dichte gefüllt wird.

In einer bevorzugten Ausführungsform der Erfindung werden genau zwei Behandlungszyklen durchgeführt, wobei der erste Zyklus das Aufgeben der in einer Produktlösung enthaltenen aufzutrennenden oder/und zu reinigenden Substanzen und der zweite Zyklus die Elution und chromatographische Auftrennung von auf der Säule zurückgehaltenen Substanzen mit einem Elutionsmittel umfaßt. Bei dieser Ausführungsform folgt üblicherweise nach dem Aufgeben der Produktlösung die erfindungsgemäße Drehung der Trennsäule um ca. 180° und die Elution mit dem Elutionsmittel .

Besonders bevorzugt zeichnet sich das erfindungsgemäße Verfahren in zwei Behandlungszyklen durch die folgenden Schritte aus:

a) Aufgeben einer Produktlösung (2) auf die mit Elutionsmittel (1) beladene Säule, wobei die Lösung (2) entweder im Bereich des unteren Säulenendes in einem aufwärts gerichteten Strom aufgegeben wird, wenn die Lösung (2) eine höhere Dichte als die Lösung (1) aufweist, oder im Bereich des oberen Säulenendes in einem abwärts gerichteten Strom aufgegeben wird, wenn die Lösung (2) eine geringere Dichte als die Lösung (1) aufweist, wobei die Aufgabe der Produktlösung (2) mindestens so lange fortgesetzt wird, bis die Dichte des in der Säule befindlichen Lösungsgemisches an demjenigen Ende der Säule, das von der Aufgabestelle der Produktlösung entfernt liegt, einen Wert erreicht hat, der sich um weniger als 10 % der Dichtedifferenz der Lösungen (1) und (2) von der Dichte der Produktlösung (2) unterscheidet,

b) Drehen der Säule um ca. 180° und

c) Eluieren der Probe durch Aufgeben eines Elutionsmittels am gleichen Ende der Säule wie die Produktlösung (2), so daß die Lösung (3) entweder im Bereich des nach der Drehung oberen Säulenendes in einem abwärts gerichteten Strom aufgegeben wird, wenn die Lösung (3) eine geringere Dichte als die Lösung (2) aufweist, oder im Bereich des nach der Drehung unteren Säulenendes in einem nach aufwärts gerichteten Strom aufgegeben wird, wenn die Lösung (3) eine höhere Dichte als die Lösung (2) aufweist.

Vorzugsweise verwendet man dabei eine Produktlösung, die eine höhere Dichte als das Elutionsmittel aufweist. In diesem Fall wird die spezifisch schwerere Produktlösung am Boden einer Trennsäule bzw. der ersten Säule eines Systems mehrerer vorzugsweise in Serie geschalteter Trennsäulen mit aufwärts gerichtetem Strom aufgegeben, so lange bis die Dichte des in der Säule befindlichen Lösungsgemisches am Kopf der Säule eine Dichte erreicht hat, die sich um weniger als 10 %, vorzugsweise weniger als 5 % der Dichtedifferenz der Produkt und der Waschlösung von der Dichte der Produktlösung unterscheidet, so daß keine oder nur mehr geringe Dichteunterschiede der Flüssigkeit innerhalb der Säule bestehen. Die Bedingung für eine Beendigung des Aufgebens der Produktlösung hinsichtlich des in der Säule gemessenen Dichtewert (D*) läßt sich wie folgt darstellen:

$$D(2) - D^* \leq 0,1 \cdot |D(2) - D(1)|$$

wobei D(1) die Dichte des Elutionsmittels und D(2) die Dichte der Produktlösung darstellt. Die Messung von

3

D* muß dabei nicht direkt über eine Dichtebestimmung erfolgen. D* kann auch indirekt bestimmt werden. Dies erfolgt z.B. über die Bestimmung des Brechungsindex.

Sodann wird die Säule um ca. 180° gedreht und statt der Produktlösung wird das spezifisch leichtere Elutionsmittel an gleicher Stelle mit nunmehr abwärts gerichtetem Strom aufgegeben. Bei Verwendung einer Serie von Trennsäulen ist die Stromrichtung der einzelnen Säulen vor Durchgang der zu trennenden Zone zunächst aufwärts gerichtet, mit Überschreiten der höchsten Dichte oder Konzentration erfolgt jedoch Drehung um ca. 180°, sodaß der Elutionsstrom nunmehr abwärts gerichtet ist. Die Aufgabe der Speiselösung und die Drehung der Säule(n) kann einmalig, in zyklischer Wiederholung oder, wie bei einer moving port technique üblich, mit Wechsel der Zufuhr und Entnahmestellen innerhalb einer zyklischen Säulenanordnung erfolgen. Wesentlich ist, daß der Dichtegradient des in einer Säule befindlichen Flüssigkeitsstromes stets so gerichtet ist, daß die Dichte in Richtung der Schwerkraft zunimmt.

Durch das erfindungsgemäße Verfahren wird erreicht, daß in der Säule stets eine stabile Schichtung der Flüssigkeit vorliegt. Ein Durchsickern von Produktlösung oder Eluent wird vermieden. Da eine natürliche Tendenz zur horizontalen Schichtung vorliegt, kann auf die üblichen komplizierten Konstruktionen der Säulenböden zur gleichmäßigen Verteilung des Flüssigkeitsstromes verzichtet werden. Durch die in der Richtung wechselnde Schwerkraftwirkung auf das Trennmedium wird zudem eine Straßenbildung weitgehend verhindert. Sehr wesentlich ist auch, daß kaum zu vermeidende Toträume, wie sie z.B. durch osmotische Schrumpfung des Trennmediums oder durch Packungsverdichtung nach längerem Gebrauch einer Säule entstehen, im Unterschied zu einer Verfahrensführung gemäß dem Stand der Technik, kaum mehr schädliche Auswirkungen haben.

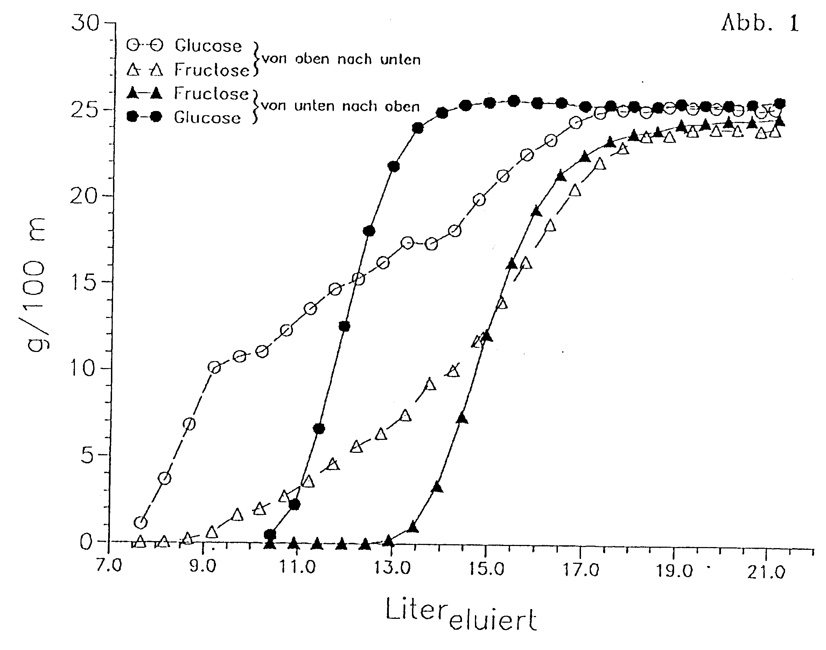

Das folgende Beispiel zeigt die Effektivität des erfindungsgemäßen Verfahrens, indem auf ein und dieselbe Trennsäule eine Invertzuckerlösung einmal erfindungsgemäß in aufwärts gerichtetem Strom und zum Vergleich konventionell in abwärts gerichtetem Strom solange aufgegeben wurde, bis das Eluat dieselbe Konzentration und Zusammensetzung aufwies wie der Zulauf (Zustand der Sättigung). Aus den Tabellen 1 und 2 sowie Abb. 1 geht hervor, daß in letzterem Fall die Zucker wesentlich früher, unregelmäßiger und mit flacherem Konzentrationsverlauf durchbrechen und daß die in diesem System retinierte Fructose in wesentlich geringerem Abstand von der Glucose erscheint als in ersterem Fall, was einer bedeutend geringeren Trenn-Effektivität entspricht.

Bei der Auswaschung einer wie beschrieben gesättigten Säule mit Wasser wäre ein ähnlicher Effekt zu beobachten, da bei Zufuhr des Eluenten in einem abwärts gerichtetem Strome, also im Falle des erfindungsgemäßen Verfahrens nach Drehung der Trennsäule um 180°, optimale Elutionsverhältnisse durch Erhalten des abwärtsgerichteten Dichtegradienten herrschen. Da das Auswaschen bei konventioneller Chromatographie in gleicher Weise erfolgt, wurde auf eine Darstellung des Elutionsverlaufes verzichtet.

Das folgende Beispiel soll in Verbindung mit der Zeichnung die vorliegende Erfindung weiter verdeutlichen. In der Zeichnung zeigt

Abb. 1    eine graphische Darstellung des Elutionsverlaufs einer Glucose und Fructose enthaltenden Zuckerlösung in abwärts und aufwärts gerichtetem Strom.

Beispiel (Sättigungsversuch):

Eine Glassäule, innerer Durchmesser 15 cm, Höhe 100 cm, Volumen 17,7 l, ausgerüstet mit Heizmantel, an beiden Enden mit siebbedeckten Verteiler-Endstücken versehen, wurde mit LEWATIT TSW 40 (Fa. Bayer, Leverkusen), einem Kationenaustauscherharz auf Basis von sulfoniertem, mit 4 % Divinylbenzol quervernetztem Polystyrol, effektive Korngröße 0,35 mm, in der Ca$^{++}$-Form totvolumenfrei befüllt und auf 60°C beheizt.

Über eine Dosierpumpe wurde eine Lösung mit je 25 % G/V Glucose und Fructose mit 5 l/h aufgegeben:

a) von oben nach unten (konventionell),

b) von unten nach oben (erfindungsgemäß).

Von der ablaufenden Flüssigkeit wurden nach einem zuckerfreien Vorlauf Fraktionen von je etwa 500 ml aufgefangen, das Volumen genau gemessen und der Gehalt an Glucose und Fructose mittels HPLC genau bestimmt.

Das Ergebnis ist in Tab. 1 für Arbeitsweise a), in Tab. 2 für Arbeitsweise b) und vergleichend graphisch in Abb. 1 dargestellt.

Tabelle 1

| Fraktion | Volumen [ml] | Σ Volumen [ml] | Glucose g/ml | Fructose g/ml |
|---|---|---|---|---|
| Vorlauf | 7165 | 7165 | 0 | 0 |
| 1 | 500 | 7665 | 0.01 | 0.00 |
| 2 | 500 | 8165 | 0.04 | 0.00 |
| 3 | 505 | 8670 | 0.07 | 0.00 |
| 4 | 510 | 9180 | 0.10 | 0.01 |
| 5 | 540 | 9720 | 0.11 | 0.02 |
| 6 | 475 | 10195 | 0.11 | 0.02 |
| 7 | 510 | 10705 | 0.12 | 0.03 |
| 8 | 510 | 11215 | 0.14 | 0.04 |
| 9 | 510 | 11725 | 0.15 | 0.05 |
| 10 | 505 | 12230 | 0.15 | 0.06 |
| 11 | 510 | 12740 | 0.16 | 0.06 |
| 12 | 505 | 13245 | 0.17 | 0.07 |
| 13 | 510 | 13755 | 0.17 | 0.09 |
| 14 | 495 | 14250 | 0.18 | 0.10 |
| 15 | 510 | 14760 | 0.20 | 0.12 |
| 16 | 500 | 15260 | 0.21 | 0.14 |
| 17 | 500 | 15760 | 0.23 | 0.16 |
| 18 | 500 | 16260 | 0.23 | 0.19 |
| 19 | 505 | 16765 | 0.25 | 0.21 |
| 20 | 520 | 17285 | 0.25 | 0.22 |
| 21 | 495 | 17780 | 0.25 | 0.23 |
| 22 | 500 | 18280 | 0.25 | 0.24 |
| 23 | 500 | 18780 | 0.25 | 0.24 |
| 24 | 490 | 19270 | 0.25 | 0.24 |
| 25 | 500 | 19770 | 0.25 | 0.24 |
| 26 | 480 | 20250 | 0.25 | 0.25 |
| 27 | 500 | 20750 | 0.25 | 0.25 |
| 28 | 300 | 21050 | 0.25 | 0.25 |
| Aufgabelsg. | | 21050 | 0.25 | 0.25 |

Tabelle 2

| Fraktion | Volumen [ml] | Σ Volumen [ml] | Glucose g/ml | Fructose g/ml |
|---|---|---|---|---|
| Vorlauf | 9910 | 9910 | 0.00 | 0.00 |
| 1 | 510 | 10420 | 0.00 | 0.00 |
| 2 | 510 | 10930 | 0.02 | 0.00 |
| 3 | 500 | 11430 | 0.07 | 0.00 |
| 4 | 505 | 11935 | 0.13 | 0.00 |
| 5 | 500 | 12435 | 0.18 | 0.00 |
| 6 | 505 | 12940 | 0.22 | 0.00 |
| 7 | 495 | 13435 | 0.24 | 0.01 |
| 8 | 505 | 13940 | 0.25 | 0.03 |
| 9 | 500 | 14440 | 0.25 | 0.07 |
| 10 | 510 | 14950 | 0.26 | 0.12 |
| 11 | 505 | 15455 | 0.26 | 0.16 |
| 12 | 500 | 15955 | 0.26 | 0.19 |
| 13 | 510 | 15465 | 0.26 | 0.21 |
| 14 | 500 | 16965 | 0.25 | 0.23 |
| 15 | 540 | 17505 | 0.25 | 0.23 |
| 16 | 510 | 18015 | 0.25 | 0.24 |
| 17 | 510 | 18525 | 0.25 | 0.24 |
| 18 | 505 | 19030 | 0.25 | 0.24 |
| 19 | 505 | 19535 | 0.25 | 0.24 |
| 20 | 510 | 20045 | 0.25 | 0.25 |
| 21 | 510 | 20555 | 0.25 | 0.25 |
| 22 | 585 | 21140 | 0.25 | 0.25 |
| Aufgabelsg. | | 21140 | 0.25 | 0.25 |

**Patentansprüche**

1. Verfahren zur chromatographischen Auftrennung oder/und Reinigung von Substanzen oder Substanzgemischen über mindestens eine vertikal angeordnete Trennsäule,
   **dadurch gekennzeichnet**,
   daß man an der Trennsäule mindestens 2 Behandlungszyklen mit Lösungen alternierender spezifischer Dichte durchführt, wobei die Lösungen immer vom gleichen Ende her auf die Säule gegeben werden und die Säule mindestens einmal um die Querachse gedreht wird, so daß der Dichtegradient des in der Säule befindlichen Flüssigkeitsstromes immer so gerichtet ist, daß die Dichte in Richtung der Schwerkraft zunimmt.

2. Verfahren nach Anspruch 1,
   **dadurch gekennzeichnet**,
   daß 2 Behandlungszyklen durchgeführt werden, wobei der erste Zyklus das Aufgeben der in einer Produktlösung enthaltenen aufzutrennenden oder/und zu reinigenden Substanzen und der zweite Zyklus die Elution von auf der Säule zurückgehaltenen Substanzen mit einer Elutionslösung umfaßt.

3. Verfahren nach Anspruch 1 oder 2,
   **dadurch gekennzeichnet**,
   daß nach dem Aufgeben der Produktlösung und vor der Elution mit der Elutionslösung eine Drehung der vertikal angeordneten Trennsäule um 180° erfolgt.

4. Verfahren nach Anspruch 2 oder 3,
   **gekennzeichnet durch**
   die folgenden Schritte:
   a) Aufgeben einer Produktlösung (2) auf die mit Elutionsmittel (1) beladene Säule, wobei die Lösung (2) entweder im Bereich des unteren Säulenendes in einem aufwärts gerichteten Strom aufgegeben wird, wenn die Lösung (2) eine höhere Dichte als die Lösung (1) aufweist, oder im Bereich des oberen Säulenendes in einem abwärts gerichteten Strom aufgegeben wird, wenn die Lösung (2) eine geringere Dichte als die Lösung (1) aufweist, wobei die Aufgabe der Produktlösung (2) mindestens so lange fortgesetzt wird, bis die Dichte des in der Säule befindlichen Lösungsgemisches an demjenigen Ende der Säule, das von der Aufgabestelle der Produktlösung entfernt liegt, einen Wert erreicht hat, der sich um weniger als 10 % der Dichtedifferenz der Lösungen (1) und (2) von der Dichte der Produktlösung (2) unterscheidet,

b) Drehen der Säule um die Querachse und

c) Eluieren der Probe durch Aufgeben eines Elutionsmittels am gleichen Ende der Säule wie die Produktlösung (2), so daß die Lösung (3) entweder im Bereich des nach der Drehung oberen Säulenendes in einem abwärts gerichteten Strom aufgegeben wird, wenn die Lösung (3) eine geringere Dichte als die Lösung (2) aufweist, oder im Bereich des nach der Drehung unteren Säulenendes in einem nach aufwärts gerichteten Strom aufgegeben wird, wenn die Lösung (3) eine höhere Dichte als die Lösung (2) aufweist.

**5.** Verfahren nach Anspruch 4,
**dadurch gekennzeichnet**,
daß man eine Produktlösung verwendet, die eine höhere Dichte als das Elutionsmittel aufweist.

**6.** Verfahren nach einem der Ansprüche 3 bis 5,
**dadurch gekennzeichnet**,
daß man mehrere in Serie geschaltete Trennsäulen verwendet und jede einzelne Säule bei Durchlauf der Produktlösung mit Überschreiten eines Maximums oder Minimums der Dichte des in der Säule befindlichen flüssigen Mediums um 180° gedreht wird.

**7.** Verfahren nach einem der Ansprüche 3 bis 6,
**dadurch gekennzeichnet**,
daß man eine oder mehrere Trennsäulen in kontinuierlichem Betrieb verwendet und jede einzelne Säule bei Durchlauf des Elutionsmittels mit Überschreiten eines Maximums oder Minimums der Dichte des in der Säule befindlichen Lösungsgemisches erneut um 180° gedreht wird.

**8.** Verfahren nach einem der vorherigen Ansprüche,
**dadurch gekennzeichnet**,
daß man eine Invertzuckerlösung auftrennt.

**9.** Verfahren nach Anspruch 8,
**dadurch gekennzeichnet**,
daß man eine oder mehrere mit Kationenaustauscherharz gefüllte Trennsäulen verwendet.

Abb. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 102 179 (SNELL) <br> --- | | B01D15/08 <br> C13D3/14 <br> G01N30/38 |
| A | US-A-3 673 085 (MINART) <br><br> ----- | | |
| | | | **RECHERCHIERTE SACHGEBIETE (Int. Cl.5)** <br><br> B01D <br> C13D <br> G01N |

Der vorliegende Recherchenbericht wurde für alle Patentansprüche erstellt

| Recherchenort | Abschlußdatum der Recherche | Prüfer |
|---|---|---|
| DEN HAAG | 17 MAI 1993 | WENDLING J.P. |